**Europäisches Patentamt**

**European Patent Office**

**Office européen des brevets**

(11) Veröffentlichungsnummer: **0 211 134**
**A1**

## (12) EUROPÄISCHE PATENTANMELDUNG

(21) Anmeldenummer: 86102693.8

(51) Int. Cl.⁴: **A22C 9/00**

(22) Anmeldetag: 01.03.86

(30) Priorität: 01.08.85 DE 3527575

(43) Veröffentlichungstag der Anmeldung:
25.02.87 Patentblatt 87/09

(84) Benannte Vertragsstaaten:
AT BE CH DE FR GB IT LI NL SE

(71) Anmelder: **Schwarz, Paul Otto**
**Neuenschleuse 10**
**D-2155 Jork(DE)**

(72) Erfinder: **Schwarz, Paul Otto**
**Neuenschleuse 10**
**D-2155 Jork(DE)**

(74) Vertreter: **Schmidt-Bogatzky, Jürgen, Dr. Ing.**
**Schlossmühlendamm 1**
**D-2100 Hamburg 90(DE)**

(54) Verfahren zur Auflockerung der Muskel von Fleischteilen mittels einer Polter-Massier-Vorrichtung mit einer drehbaren Trommel und Einrichtung zur Durchführung des Verfahrens.

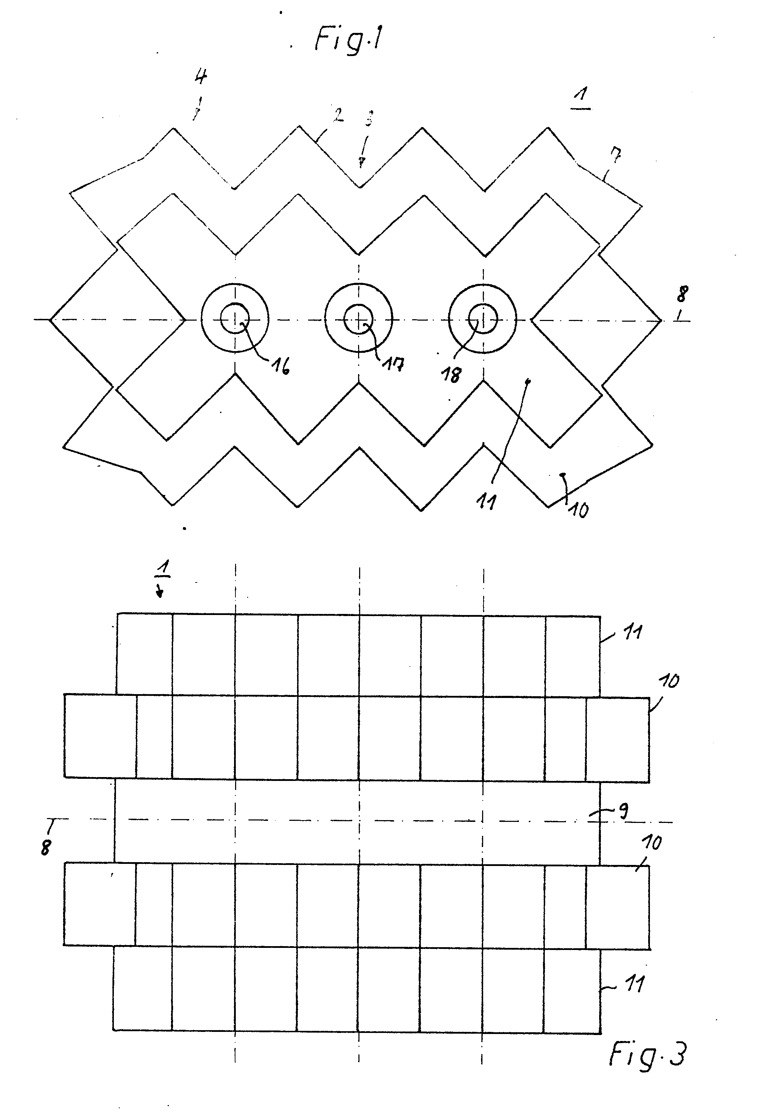

(57) Die Erfindung betrifft ein Verfahren zur Auflockerung der Muskel von Fleischteilen mittels einer Polter-Massier-Vorrichtung mit einer drehbaren Trommel, bei der mechanisch auf die tieferen Muskelschichten eingewirkt. Protein aktiviert und ein bessere Bindigkeit der Fleischteile erzielt wird und eine Einrichtung zur Durchführung des Verfahrens. Die zu behandelnden Fleischteile werden durch in der Trommel in dem Füllgut befindliche frei drehende oberflächenstrukturierte Walkkörper 1 im Zeitablauf unterschiedlichen Druckbelastungen ausgesetzt. Die Oberfläche 4 der Walkkörper 1 ist mittels Vorsprüngen 2 grob strukturiert Die Walkkörper 1 können aus Walkkörpersegmenten 9, 10. 11 bestehen oder aber auch einstückig ausgebildet sein (Fig. 1).

Fig.1

## Verfahren zur Auflockerung der Muskel von Fleischteilen mittels einer Polter-Massier-Vorrichtung mit einer drehbaren Trommel und Einrichtung zur Durchführung des Verfahrens

Die Erfindung betrifft ein Verfahren zur Auflockerung der Muskel von Fleischteilen mittels einer Polter-Massier-Vorrichtung mit einer drehbaren Trommel, bei der mechanisch auf die tieferen Muskelschichten eingewirkt, Protein aktiviert und eine bessere Bindigkeit der Fleischteile erzielt wird und eine Einrichtung zur Durchführung des Verfahrens.

Bei derartigen bekannten Polter-Massier-Vorrichtungen sind in der inneren Wandung der Trommel in deren Innenraum gerichtete Schikanen vorgesehen, die mechanisch auf die Fleischteile einwirken. Diese Vorrichtungen weisen erhebliche Nachteile auf. Die festen Widerstände bewirken einen Schlag-Fall-und Reibeeffekt. Wenn eine - schonendere Behandlung der Fleischteile gewünscht wird, müssen wenige glatte Widerstände verwendet werden, mit der Folge einer langen Laufzeit und keiner ausreichenden Eiweißaktivierung. Bei - schneller Behandlung -insbesondere mit aggressiven Widerständen-werden die Fleischteile und evtl. auch deren Fleischstruktur beschädigt und zerrissen. Als Vorbearbeitung für das Poltern, Tumbeln und Massieren ist es auch bekannt, mit Maschinen durch steaken oder quetschen die Fleischteile zu bearbeiten. Hierbei besteht ebenfalls der Nachteil, daß die Fleischstruktur beschädigt wird. Ferner ist die Anschaffung teurer Geräte sowie zusätzliche Energie und zusätzlicher Platzbedarf erforderlich.

Die Aufgabe der Erfindung besteht darin, ein Verfahren zur Auflockerung der Muskel von Fleischteilen und eine Einrichtung zur Durchführung des Verfahrens mittels bekannter Polter-Massier-Vorrichtungen so zu schaffen, daß durch einen permanenten wiederkehrenden Druck auf die einzelnen Fleischteile die Fleischstruktur nicht beschädigt und der Eiweißaufschluß schneller und - schonender gefördert wird.

Erfindungsgemäß erfolgt die Lösung der Aufgabe dadurch, daß die zu behandelnden Fleischteile durch sich in der Trommel der Polter-Massier-Vorrichtung in dem Füllgut befindliche frei drehende oberflächenstrukturierte Körper im Zeitablauf unterschiedlichen Druckbelastungen ausgesetzt werden.

In einer Ausgestaltung der Erfindung ist die Einrichtung zur Durchführung des Verfahrens durch ein oder mehrere lose Walkkörper mit mittels Vorsprüngen grob strukturiert ausgebildeter Oberfläche gekennzeichnet, die in die drehbare Trommel einer Polter-Massier-Vorrichtung zwischen die zu bearbeitenden Fleischteile eingelagert sind.

Weitere Merkmale der Erfindung werden in den Unteransprüchen beschrieben.

Bei Verwendung der erfindungsgemäßen Walkkörper können Vorbearbeitungsgeräte bei den überwiegenden Produktionsabläufen eingespart werden. Hierdurch wird eine Zeitersparnis und Energieersparnis bei der Bearbeitung von ca. 50% erzielt. Ferner wird die Kapazität erhöht. Da keine zusätzlichen Maschinen erforderlich sind erfolgt nur eine geringe Kapitalbindung. Von Vorteil ist ebenfalls, daß für zusätzliche Maschinen kein Platzbedarf erforderlich ist. Durch die schonende Behandlung erfolgt keine Veränderung der Fleischstruktur, so daß eine ausgeglichenere Ware erzielt wird. Hierdurch werden für den Hersteller konstante Kalkulationswerte beim Fertigprodukt gewährleistet. Dieses weist einen besseren Zusammenhalt auf. Außerdem sind die Walkkörper unkompliziert einzusetzen da lediglich jeweils ein Arbeitsgang für die Fleischbearbeitung erforderlich ist.

In den Zeichnungen ist eine Ausführungsform der erfindungsgemäßen Walkkörper dargestellt. Es zeigt

Fig. 1 einen Walkkörper in einer Seitenansicht,

Fig. 2 den Walkkörper nach Fig. 1 in einer Queransicht,

Fig. 3 den Walkkörper nach Fig. 1 in einer Draufsicht.

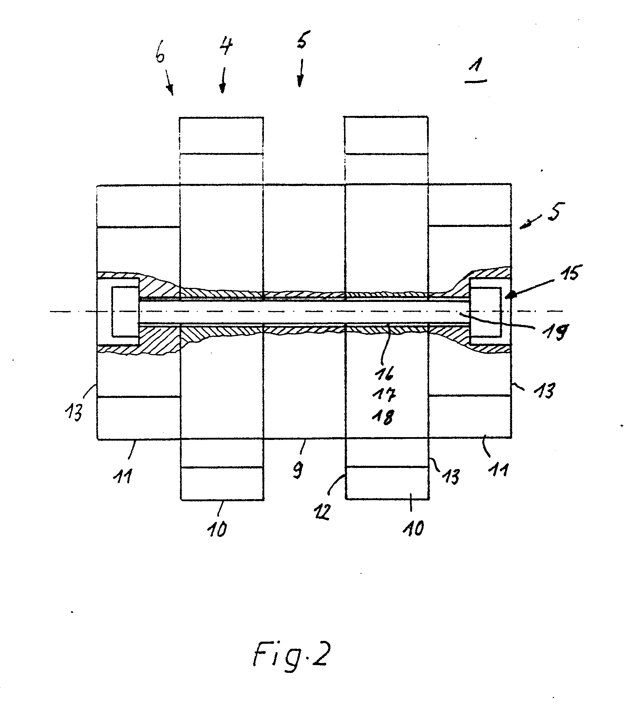

Der in den Fig. 1 bis 3 dargestellte Walkkörper 1 weist eine durch Vorsprünge 2 bedingte grob strukturierte ausgebildete Oberfläche 4 auf. Zwischen den Vorsprüngen 2 befindet sich jeweils eine Vertiefung 3. Die Vorsprünge 2 und Vertiefungen 3 weisen einen allgemein dreieckförmigen Querschnitt auf. Die ebenen Oberflächenabschnitte 7 der strukturiert ausgebildeten Abschnitte 6 des Walkkörpers 1 sind zur Mittelacnse 8 der Walkkörpers 1 winklig angeordnet.

Wie aus den Fig. 1 und 3 ersichtlich, sind die Vorsprünge 2 und Vertiefungen 3 zur Mittelachse 8 des Walkkörpers 1 im unterschiedlichen Abstand angeordnet.

Der Walkkörper 1 besteht aus miteinander verbundenen Walkkörpersegmenten 9, 10, 11. Das Walkkörpersegment 9 ist quaderförmig ausgebildet und weist keine Vorsprünge 2 oder Vertiefungen 3 auf. Die Walkkörpersegmente 10, 11 sind allgemein scheibenförmig mit zwei zueinander parallelen Seitenflächen 12, 13 ausgebildet, und weisen auf der anderen Umfangsfläche 14 Vorsprünge 2 und Vertiefungen 3 auf. Die Walkkörpersegmente 10, 11 sind in der Höhe und Länge unterschiedlich dimensioniert und bezogen auf das Walkkörpersegment 9 symmetrisch miteinander verbunden.

Zur Verbindung der Walkkörpersegemente 9, 10, 11 sind in diesen auf der Mittelachse 8 im Abstand voneinander Durchbrechungen 16, 17, 18 ausgebildet, die bei den einzelnen Walkkörpersegmenten 9, 10, 11 jeweils zueinander fluchten. Durch die Durchbrechungen 16, 17, 18 ist jeweils ein Schraubbolzen 19 geführt, der zur Ausbildung einer Schraubverbindung 15 dient. Durch diese Schraubverbindung 15 werden die Walkkörpersegmente 9, 10, 11 fest aber lösbar miteinander verbunden.

Die Walkkörpersegmente 9, 10, 11 bestehen vorzugsweise aus einem Kunststoff, können aber auch aus Metall, Holz oder Hartgummi ausgebildet sein. Zweckmäßig ist es, die Außenfläche der Walkkörper 1 bzw. Walkkörpersegmente 9, 10, 11 glatt auszubilden, damit die Reinigung von Fleischresten erleichtert wird. Es ist auch möglich, die einzelnen Walkkörpersegmente 9, 10, 11 statt durch Schraubverbindungen 15 durch Klebverbindungen miteinander zu verbinden. Sofern die Walkkörpersegmente 9, 10, 11 aus Metall gebildet sind können diese auch miteinander verschweißt werden.

Für die Erfindung ist es nicht entscheidend, daß die Walkkörpersegmente 10, 11 die in den Fig. 1 und 3 dargestellte strukturierte Oberfläche 4 aufweisen. Statt im Querschnitt dreieckförmiger Vorsprünge und Vertiefungen 2, 3 können die Vorsprünge und Vertiefungen auch eine andere geometrische Form aufweisen, wobei z. B. die Oberflächenabschnitte 7 auch gekrümmt ausgebildet sein können. Entscheidend ist, daß an den Walkkörpersegmenten 10, 11 Oberflächenabschnitte 7 vorhanden sind, die zur Mittelachse 8 des Walkkörpers 1 winklig angeordnet sind.

Die Walkkörper 1 können als Tiefzieh-oder Preßteile ausgebildet sein. Es ist ferner möglich, die Walkkörper 1 als Hohlkörper mit an der Oberfläche ange ordneten Vorsprüngen 2 auszubilden. Die Vorsprünge 2 können dabei in dem Mantel des als Hohlkörper gestalteten Walkkörpers 1 ausgeformt sein.

## Ansprüche

1. Verfahren zur Auflockerung der Muskel von Fleischteilen mittels einer Polter-Massier-Vorrichtung mit einer drehbaren Trommel, bei der mechanisch auf die tieferen Muskelschichten eingewirkt, Protein aktiviert und eine bessere Bindigkeit der Fleischteile erzielt wird, dadurch gekennzeichnet, daß die zu behandelnden Fleischteile durch sich in der Trommel in dem Füllgut befindliche frei drehende oberflächenstrukturierte Körper im Zeitablauf unterschiedlichen Druckbelastungen ausgesetzt werden.

2. Einrichtung zur Durchführung des Verfahrens nach Anspruch, gekennzeichnet durch ein oder mehrere lose Walkkörper (1) mit mittels Vorsprüngen (2) grob strukturiert ausgebildeter Oberfläche (4), die in die drehbare Trommel der Polter-Massier-Vorrichtung zwischen die zu bearbeitenden Fleischteile eingelagert sind.

3. Einrichtung nach Anspruch 2, dadurch gekennzeichnet, daß die Walkkörper (1) eine symmetrisch strukturierte Oberfläche (4) aufweisen.

4. Einrichtung nach Anspruch 2, dadurch gekennzeichnet, daß die Oberfläche (4) eines jeden Walkkörpers (1) abschnittsweise strukturiert und glattflächig ausgebildet ist.

5. Einrichtung nach Anspruch 2 bis 4, dadurch gekennzeichnet, daß die strukturiert ausgebildeten Abschnitte (6) des Walkkörpers (1) aus Vorsprüngen (2) und Vertiefungen (3) mit einem allgemein dreieckförmigen Querschnitt bestehen.

6. Einrichtung nach Anspruch 2 bis 4, dadurch gekennzeichnet, daß die strukturiert ausgebildeten Abschnitte (6) des Walkkörpers (1) ebene oder gekrümmte Oberflächenabschnitte (7) aufweisen, die zur Mittelachse (8) des Walkkörpers (1) winklig angeordnet sind.

7. Einrichtung nach einem der Ansprüche 2 bis 6, dadurch gekennzeichnet, daß die Vorsprünge (2) und Vertiefungen (3) zur Mittelachse (8) des Walkkörpers (1) im unterschiedlichen Abstand angeordnet sind.

8. Einrichtung nach Anspruch 2 bis 7, dadurch gekennzeichnet, daß die Walkkörper (1) einstückig ausgebildet sind.

9. Einrichtung nach Anspruch 8, dadurch gekennzeichnet, daß die Walkkörper (1) als Tiefzieh- oder Preßteile ausgebildet sind.

10. Einrichtung nach Anspruch 9, dadurch gekennzeichnet, daß die Walkkörper (1) als Hohlkörper mit an der Oberfläche angeordneten Vorsprüngen (2) ausgebildet sind.

11. Einrichtung nach Anspruch 10 dadurch gekennzeichnet, daß die Vorsprünge (2) in dem Mantel des als Hohlkörper ausgebildeten Walkkörper (1) ausgeformt sind.

12. Einrichtung nach einem der Ansprüche 2 bis 7, dadurch gekennzeichnet, daß die Walkkörper (1) aus miteinander verbundenen Walkkörpersegmenten (9, 10, 11) bestehen.

13. Einrichtung nach Anspruch 12, dadurch gekennzeichnet, daß die Walkkörpersegmente (10, 11) allgemein scheibenförmig mit zwei zueinander parallelen Seitenflächen (12, 13) ausgebildet sind und an der anderen Umfangsfläche (14) Vorsprünge (2) und Vertiefungen (3) aufweisen.

14. Einrichtung nach Anspruch 12 und 13, dadurch gekennzeichnet, daß mindestens ein Walkkörpersegmente (9) quaderförmig ohne Vorsprünge (2) und Vertiefungen (3) ausgebildet und zwischen den anderen Walkkörpersegmenten (10, 11) angeordnet ist.

15. Einrichtung nach Anspruch 14, dadurch gekennzeichnet, daß die Walkkörpersegmente (10, 11) in der Höhe und Länge unterschiedlich dimensioniert und bezogen auf das Walkkörpersegment (9) symmetrisch miteinander verbunden sind.

16. Einrichtung nach Anspruch 15, dadurch gekennzeichnet, daß die Walkkörpersegmente (9, 10, 11) mittels Kleb-oder Schweißverbindungen miteinander verbunden sind.

17. Einrichtung nach Anspruch 15, dadurch gekennzeichnet, daß die Walkkörpersegmente (9, 10, 11) mittels Schraubverbindungen (15) miteinander lösbar verbunden sind.

18. Einrichtung nach einem der Ansprüche 2 bis 17, dadurch gekennzeichnet, daß die Walkkörper (1) bzw. Walkkörpersegmente (9, 10, 11) aus Metall, Holz, Kunststoff, Hartgummi od. dg. bestehen.

19. Einrichtung nach Anspruch 18, dadurch gekennzeichnet, daß die Außenfläche der Walkkörper (1) bzw. Walkkörpersegmente (9, 10, 11) glatt ausgebildet ist.

## Fig.1

## Fig.3

Fig. 2

| | Europäisches Patentamt | **EUROPÄISCHER RECHERCHENBERICHT** | Nummer der Anmeldung |
| | | | EP 86 10 2693 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CH-A- 571 823 (BARTH) <br> * Insgesamt * <br><br> --- | 1 | A 22 C 9/00 |
| A | GB-A-1 232 905 (FALBORG) <br><br> --- | | |
| A | FR-A- 356 464 (DEAL) <br><br> --- | | |
| A | FR-A- 731 958 (BELS) <br><br> --- | | |
| A | FR-A-2 116 614 (REBISCOUL) <br><br> --- | | |
| A | US-A-3 378 234 (SVEC) <br><br> ----- | | |

### RECHERCHIERTE SACHGEBIETE (Int. Cl.4)

A 22 C

Der vorliegende Recherchenbericht wurde für alle Patentansprüche erstellt.

| Recherchenort | Abschlußdatum der Recherche | Prüfer |
|---|---|---|
| DEN HAAG | 20-10-1988 | DE LAMEILLIEURE D. |